# EUROPEAN PATENT SPECIFICATION

(11) **EP 2 138 647 B1**
(45) Date of publication and mention of the grant of the patent: **19.09.2012**
(21) Application number: 09160045.2
(22) Date of filing: 12.05.2009
(51) Int. Cl.: E04D 13/18, F24J 2/52, H01L 31/048

(54) **Covering panel to assemble photovoltaic modules and method to make said covering panel**
Abdeckplatte zur Montage von Solarmodulen und Verfahren zur Herstellung der Abdeckplatte
Panneau de recouvrement pour assembler des modules photovoltaïques et procédé pour fabriquer ce panneau de recouvrement

(30) Priority: 25.06.2008 IT UD20080146
(43) Date of publication of application: 30.12.2009
(73) Proprietor: Breda Tecnologie Commerciali SRL, 33097 Spilimbergo (PN) (IT)
(72) Inventor: Breda, Daniele, 33097, Istrago di Spilimbergo (PN) (IT)
(74) Representative: Petraz, Gilberto Luigi

(56) References cited:
- EP-A- 1 126 098
- EP-A- 1 804 008
- DE-A1- 19 802 997
- JP-A- 2000 110 308
- JP-A- 2000 179 106

## Description

### FIELD OF THE INVENTION

The present invention concerns a covering panel usable to assemble and install photovoltaic modules.

In particular, the panel according to the present invention is of the type used, preferably but not exclusively, to make roofs and walls of industrial, agricultural, commercial, civil, sport and recreational constructions, either for public or private use.

The panel according to the present invention is suitable to accommodate photovoltaic modules of various types and dimensions and/or pedestrian modules able to allow an operator to walk on the roof to carry out maintenance operations easily.

### BACKGROUND OF THE INVENTION

JP 2000 110 308 A discloses a roof covering panel with auxiliary assembly elements according to the preamble of claim 1.

JP 2000 179 106 A discloses an attaching device to attach panel-shaped structures to a roof panel.

In the industrial, agricultural, commercial and civil fields there is an ever-growing need to use photovoltaic modules for the conversion of solar energy into electric energy to be used for productive purposes, such as for example the electric feed of machines, to light buildings in general or to obtain electric energy in general at a reduced cost. To this purpose it is known to associate photovoltaic modules with the roofs of industrial, agricultural, commercial, civil, sport or recreation buildings. The roofs are normally made by means of a plurality of covering panels made of sheet metal, placed adjacent to each other, provided with a profile defined by a plurality of frets disposed at a fixed pitch with respect to each other, with which a coordinated internal layer of heat insulation material is associated, such as polyurethane, resin, mineral wool or other similar or comparable materials; the external supports can be made of rolled metal products (steel, aluminum, aluzinc etc.) fiberglass or PVC.

When photovoltaic modules have to be associated with such roofs, a first known solution provides to use support structures fixed to the covering panels and raised with respect to the plane defined by the upper surface of said frets.

One disadvantage of this first known solution is that it does not make a roof in which the covering panels and the photovoltaic modules are integrated with each other. This can cause problems of water infiltration and stability for the photovoltaic modules and for the whole structure, or the need for frequent maintenance operations to ensure the necessary stability of the photovoltaic modules and solve problems of infiltration due to the holes made in the covering panels.

To overcome this disadvantage, in a second known solution, lateral frets are made on the covering panels during the production stage, suitably shaped in steps so as to define supporting and containing seatings for the photovoltaic modules, so as to obtain a roof which achieves an integration of the covering panels and the photovoltaic modules.

One disadvantage of this second known solution is that it allows, for each covering panel, only the association of a photovoltaic module with a width that is exactly equal to a multiple of the distance between one fret and the next, with each covering panel being provided with frets disposed at a fixed pitch.

Another disadvantage of this second known solution is that, to make a covering panel to be adapted to the dimensions of the photovoltaic module to be installed, it is necessary to vary the whole production line of covering panel, so as to reduce or increase the pitch between each fret depending on the dimensions of the photovoltaic module: this entails high production costs, problems of costs of the molds, warehouse stocks and other similar problems.

Purpose of the present invention is to achieve a covering panel used for the assembly and installation of photovoltaic modules which substantially allows to integrate any type and dimension of photovoltaic module, without needing to vary the production line of the covering panel and which therefore does not determine high production costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a covering panel according to the present invention is able to be used to make roofs and walls for industrial, agricultural, commercial, civil, sport and recreation buildings, both public and private, and is able to accommodate at least one photovoltaic module for the production of electric energy.

The covering panel comprises at least an external layer made of shaped metal material, for example shaped metal sheet, so as to form a profile defined by a series of frets disposed parallel and distanced transversely.

According to a characteristic feature of the present invention, the covering panel comprises one or more auxiliary assembly elements, able to be associated with one or more of said frets, and shaped so as to define at least a supporting seating on which a part of the end of the photovoltaic module is able to be disposed, to allow the photovoltaic module to be associated with the covering panel in a substantially integrated way.

According to a variant of the present invention each of said auxiliary assembly elements comprises two supporting seatings, opposite each other, so that the ends of two adjacent modules can be rested on said seatings to form a continuous covering by the photovoltaic modules.

In a preferential form of embodiment, the assembly elements themselves have a substantially fretted form, of a greater height than the frets normally used in covering panels.

According to the present invention said supporting seatings have sizes, at least in width, adapted to the size of the module to be associated with the covering panel.

Thanks to this correspondence in the width of the seating, combined with the possibility of selectively choosing which and how many frets to equip with the auxiliary assembly element, it is possible to assemble photovoltaic modules having a variable width in an ample range of widths made by the producers.

According to the present invention said supporting seatings define a supporting surface substantially coplanar to the plane defined by the upper surface of said frets.

According to a variant of the present invention the supporting seating has a height substantially equal to the height of the photovoltaic module.

According to the present invention, each auxiliary assembly element comprises an upper shaped profile associated at the lower part with a layer of heat insulating material having a shape coordinated with the shape of said profile.

Each assembly element is able to be associated with a relative fret substantially by means of same-shape coupling.

According to the present invention the layer of heat insulating material associated with the shaped profile of the assembly element is shaped so as to define a groove having a shape coordinated with the shape of the fret which it must cover.

The panel according to the present invention therefore allows to associate the photovoltaic module with the covering panel so as to make an integrated roof.

The covering panel according to the present invention allows to integrate any type of photovoltaic module, using known covering panels and easily available on the market. Therefore it is not necessary to vary the production line of the covering panel itself, but simply to selectively locate, and suitably size, the auxiliary assembly element, with all the subsequent advantages in terms of cost.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a part perspective front view of a covering panel according to the present invention;
- fig. 2 is a front view of a plurality of covering panels according to the present invention, in an operating condition.

### DETAILED DESCRIPTION OF A PREFERENTIAL FORM OF EMBODIMENT

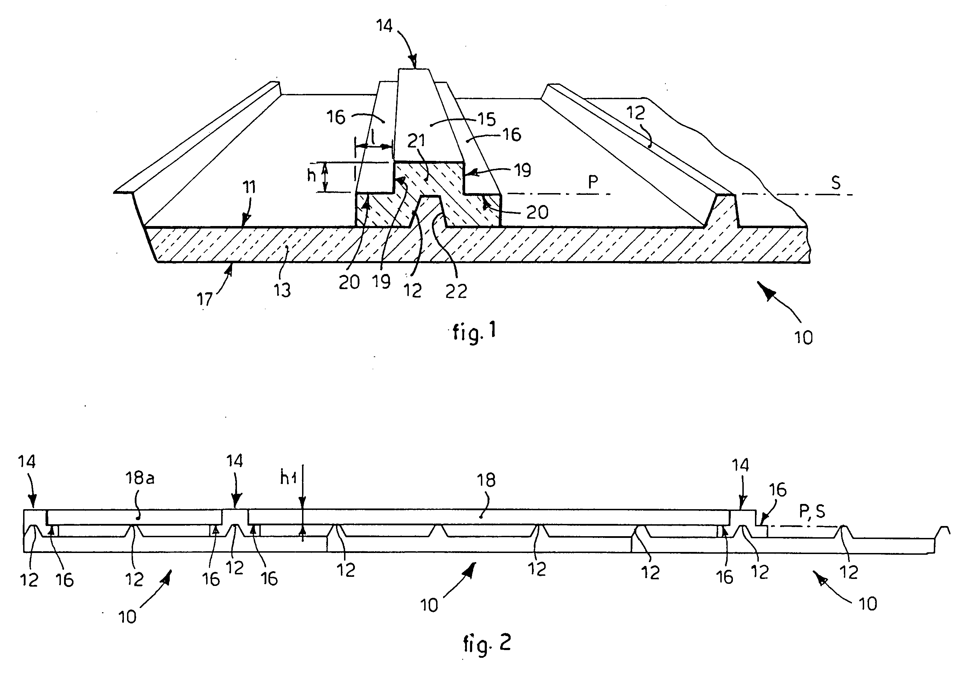

With reference to fig.1, a covering panel 10 according to the present invention is able to be used to make roofs and walls of buildings, for example, but not only, industrial, commercial, agricultural, civil, sport and recreation.

The covering panel 10 comprises a first layer 11, normally made of sheet metal or other similar or comparable material, shaped so as to define a transverse profile provided with a plurality of frets 12 of equal shape and disposed at a fixed pitch with respect to each other. In this case said frets 12 have a trapezoidal profile, but it is not excluded that the frets 12 could have any other geometric shape.

The covering panel 10 also comprises a second layer 13, made of a heat insulating material such as polyurethane, resin, mineral wool or other similar or comparable heat insulating material, associated with the first layer 11 and having a shape mating with that of the latter. The covering panel 10 also comprises a third layer 17 to close the panel 10, made of sheet metal, fiberglass, PVC, or other similar or comparable material, associated with the second layer 13, so as to define overall a panel 10 substantially of the sandwich type.

The covering panel 10 also comprises an assembly element 14 able to be associated, in the production step of the panel, or also in a possible subsequent adaptation step, with at least one of said frets 12. The frets 12 with which a relative assembly element 14 is coupled are chosen in a manner correlated to the size of the photovoltaic module which has to be installed, as will be seen hereafter.

The assembly element 14 comprises a section 15, advantageously but not exclusively metallic, having a length substantially equal to the length of the covering panel 10. It cannot however be excluded that said section 15 can be of any other shape and can be made for example of plastic or other similar or comparable material.

The assembly element 14 also comprises a layer 21 made of a heat insulating material, associated with the section 15 and having a shape coordinated with the shape of said section 15. The layer 21 is also provided with a groove 22, having a shape coordinated with the shape of the fret 12. In this way the association between the assembly element 14 and the corresponding fret 12 is made substantially by means of same-shape coupling.

Advantageously, the assembly element 14 is made solid with the corresponding fret 12 by means of known types of glue. It is understood that the assembly element 14 can in any case be associated with the corresponding fret 12 by means of any other attachment means suitable for the purpose.

The assembly element 14 is also shaped so as to define two supporting seatings 16, opposite each other, as shown in fig. 1, or in the case where the assembly element 14 is associated with a lateral fret, a supporting seating 16, as shown in fig. 2.

The supporting seatings 16 are able to accommodate a portion, normally an end of a photovoltaic module 18 to make the association between the photovoltaic module 18 and the covering panel 10, or between the photovoltaic module 18 and several covering panels 10 disposed adjacent to each other so as to form a roof for any type of building. Each photovoltaic module 18 is able to be attached to the assembly element 14 by means of attachment means of the known type and not shown in the drawings, such as for example screws or rivets or any other similar or comparable attachment means.

Each supporting seating 16 comprises a vertical wall 19 having height h substantially equal to height h1 of the photovoltaic module 18 to be installed, and a horizontal wall 20 of variable width 1 depending on the size of said photovoltaic module 18. In this way, by varying the width 1 on both the assembly elements 14 on which the ends of the module 18 rest, there is a margin of tolerance which allows to accommodate various dimensions of the modules 18, such as for example module 18a shown in fig. 2. The horizontal wall 20 constitutes a supporting surface for the photovoltaic module 18 and defines a supporting plane P coplanar to the plane S defined by the upper surface of the frets 12. In this way, as shown in fig. 2, in the assembled condition the lateral portions of the photovoltaic module 18 rest on the horizontal walls 20 of the supporting seatings 16 of two assembly elements 14, disposed on two different covering panels 10, while the rest of the photovoltaic module 18 is supported by one or more frets 12, of the same covering panel 10 and/or of an adjacent covering panel 10. In this way a roof is made in which covering panels 10 and photovoltaic modules 18 are integrated with respect to each other.

The covering panel 10 according to the present invention as described heretofore functions as follows. To make a roof for a building a plurality of covering panels 10 adjacent to each other are used. Depending on the sizes of the photovoltaic module 18 which has to be installed and on the number of photovoltaic modules 18 which have to be installed, it is possible to dispose each covering panel 10 with the corresponding assembly element/elements 14 suitably sized and disposed at a distance one from the other substantially equal to the length of the photovoltaic module 18.

It is clear that modifications and/or additions of parts may be made to the covering panel as described heretofore, without departing from the field and scope of the present invention.

It comes within the scope of the present invention, for example, to provide that the module 18a is a pedestrian module, able to define, in association with a plurality of pedestrian modules 18a, a walkway on the roof to allow an operator to walk on the roof so as to easily carry out maintenance operations on the photovoltaic modules 18.

It is also clear that, although the present invention has been described with reference to some specific examples, a person of skill in the art shall certainly be able to achieve many other equivalent forms of covering panels, having the characteristics as set forth in the claims and hence all coming within the field of protection defined thereby.

## Claims

1. Covering panel (10), able to be used to make roofs for buildings and to accommodate at least a photovoltaic module (18) able to convert solar energy into electric energy, comprising at least an external layer (11) made of metal material shaped so as to form a profile defined by a series of frets (12) disposed parallel and distanced transversely, wherein said covering panel (10) comprises one or more auxiliary assembly elements (14) associated with one or more of said frets (12), and shaped so as to define at least a supporting seating (16) on which an end part of said photovoltaic module (18) is able to be disposed, to allow to associate said photovoltaic module (18) with said covering panel (10), wherein said supporting seatings (16) have dimensions adapted to the dimension of the photovoltaic module (18) to be associated with the covering panel and are provided with a supporting surface (20), **characterised in that** said supporting surface (20) defines a supporting plane (P) coplanar to the plane (S) defined by the upper surface of said frets (12), and wherein said auxiliary assembly elements (14) comprise at least a section (15) shaped so as to define said supporting seatings (16) and a layer (21) of heat insulating material associated at the lower part with said section (15), having a shape coordinated with the shape of said section (15), said layer (21) of heat insulating material being shaped so as to define a groove (22) having a shape coordinated with the shape of the fret (12) covered, so that in assembled condition a lateral portion of the photovoltaic module (18) can rest on said supporting surface (20) of said supporting seat (16) while the photovoltaic module (18) is at the same time supported by one or more frets (12) of the covering panel (10) and/or an adjacent covering panel (10).

2. Covering panel as in claim 1, **characterized in that** said auxiliary assembly elements (14) comprise two supporting seatings (16) opposite each other.

3. Covering panel as in claim 1, **characterized in that** said auxiliary assembly elements (14) themselves are shaped substantially as a fret (12).

4. Covering panel as in claim 1, **characterized in that** the height (h) of said supporting seating (16) is substantially equal to the height of the photovoltaic module (18).

5. Covering panel as in claim 1, **characterized in that** the width (1) of said supporting seating (16) is adapted to the dimension of the photovoltaic module (18) to be associated with the covering panel.

6. Covering panel as in claim 14; **characterized in that** said assembly elements (14) are able to be associated with one or more of said frets (12) substantially by means of same-shape coupling.

7. Method to make a covering panel (10) as defined in claim 1, able to be used to make roofs for buildings and to accommodate at least a photovoltaic module (18) able to convert solar energy into electric energy, comprising at least an external layer (11) made of metal material shaped so as to form a profile defined by a series of frets (12) disposed parallel and distanced transversely, **characterized in that** it comprises at least a step in which one or more auxiliary assembly elements (14) are associated with one or more of said frets (12), said auxiliary assembly elements (14) being shaped so as to define at least a supporting seating (16) on which an end part of the photovoltaic module (18) is disposed, to allow to associate said photovoltaic module (18) with said covering panel (10).

8. Roof of buildings made by means of a plurality of covering panels (10) as in claim 1.

## Patentansprüche

1. Abdeckpanel (10), das für die Verwendung zur Herstellung von Dächern für Gebäude und zur Aufnahme mindestens eines Fotovoltaikmoduls (18), das zur Umwandlung von Solarenergie in elektrische Energie ausgebildet ist, geeignet ist und mindestens eine aus Metallmaterial hergestellte externe Schicht (11) aufweist, die so geformt ist, dass ein durch eine Reihe von Erhebungen (12), die zueinander parallel und quer zueinander mit Abstand angeordnet sind, definiertes Profil gebildet ist, wobei das Abdeckpanel ein oder mehrere Hilfsmontageelemente (14) aufweist, die mit einem oder mehreren der Erhebungen (12) in Verbindung stehen und so geformt sind, dass mindestens eine stützende Auflagefläche (16) gebildet ist, auf der ein Endteil des Fotovoltaikmoduls (18) angeordnet werden kann, so dass das Fotovoltaikmodul (18) mit dem Abdeckpanel (10) in Verbindung gebracht werden kann, wobei die stützenden Auflageflächen (16) Abmessungen, die an die Abmessungen des Fotovoltaikmoduls (18) zur Verbindung mit dem Abdeckpanel angepasst sind, besitzen und mit einer Halteoberfläche (20) versehen sind, **dadurch gekennzeichnet, dass** die Halteoberfläche (20) eine Halteebene (P) definiert, die koplanar zu der Ebene (S) angeordnet ist, die durch die obere Oberfläche der Erhebungen (12) definiert ist, und wobei die Hilfsmontageelemente (14) mindestens einen Abschnitt (15), der so gestaltet ist, dass die stützenden Auflageflächen (16) gebildet sind, und eine Schicht (21) aus Wärmelsolationsmaterial aufweisen, das mit dem unteren Teil des Abschnitts (15) in Verbindung steht und eine Form besitzt, die an die Form des Abschnitts (15) angepasst ist, wobei die Schicht (21) aus Wärmeisolationsmaterial so gestaltet ist, dass eine Nut (22) mit einer Form gebildet ist, die an die Form der abgedeckten Erhebung (12) so angepasst ist, dass im zusammengefügten Zustand ein lateraler Bereich des Fotovoltaikmoduls (18) auf der Halteoberfläche (20) der stützenden Auflagefläche (16) aufliegt, während das Fotovoltaikmodul (18) gleichzeitig durch eine oder mehrere Erhebungen (12) des Abdeckpanels (10) und/oder eines benachbarten Abdeckpanels (10) gestützt ist.

2. Abdeckpanel nach Anspruch 1, **dadurch gekennzeichnet, dass** die Hilfsmontageelemente (14) zwei stützende Auflageflächen (16) gegenüberliegend zueinander aufweisen.

3. Abdeckpanel nach Anspruch 1, **dadurch gekennzeichnet, dass** die Hilfsmontageelemente (14) selbst im Wesentlichen als eine Erhebung (12) gestaltet sind.

4. Abdeckpanel nach Anspruch 1, **dadurch gekennzeichnet, dass** die Höhe (h) der stützenden Auflagefläche (16) im Wesentlichen gleich der Höhe des Fotovoltaikmoduls (18) ist.

5. Abdeckpanel nach Anspruch 1, **dadurch gekennzeichnet, dass** die Breite (1) der stützenden Auflagelfäche (16) an die Abmessung des Fotovoltaikmoduls (18), das mit dem Abdeckpanel zu verbinden ist, angepasst ist.

6. Abdeckpanel nach Anspruch 1, **dadurch gekennzeichnet, dass** die Montageelemente (14) ausgebildet sind, mit einer oder mehreren der Erhebungen (12) im Wesentlichen durch Formschluss verbunden zu werden.

7. Verfahren zur Herstellung eines Abdeckpanels (10) gemäß Anspruch 1, das für die Verwendung zur Herstellung von Dächern für Gebäude und zur Aufnahme mindestens eines Fotovoltaikmoduls (18), das zur Umwandlung von Solarenergie in elektrische Energie ausgebildet ist, geeignet ist und mindestens eine aus Metallmaterial hergestellte externe Schicht (11) aufweist, die so geformt ist, dass ein durch eine Reihe von Erhebungen (12), die zueinander parallel und quer zueinander mit Abstand angeordnet sind, definiertes Profil gebildet ist, **dadurch gekennzeichnet, dass** das Verfahren mindestens einen Schritt aufweist, in welchem ein oder mehrere Hilfsmontageelemente (14) mit einer oder mehreren der Erhebungen (12) in Verbindung gebracht werden, wobei die Hilfsmontageelemente (14) so gestaltet sind, dass mindestens eine stützende Auflagefläche (16) gebildet wird, auf der ein Endteil des Fotovoltaikmoduls (18) angeordnet wird, so dass ermöglicht wird, dass das Fotovoltaikmodul (18) mit dem Abdeckpanel (10) in Verbindung gebracht wird.

8. Dach von Gebäuden, das mittels mehrerer Abdeckpanele (10) gemäß Anspruch 1 hergestellt ist.

## Revendications

1. Panneau de revêtement (10) pouvant être utilisé pour réaliser des toits de bâtiments et pour loger au moins un module photovoltaïque (18) pouvant convertir l'énergie solaire en énergie électrique, comprenant au moins une couche externe (11) constituée d'un matériau métallique formé de façon à former un profilé défini par une série de cloisons (12) disposées parallèles et distancées transversalement, dans lequel ledit panneau de revêtement (10) comprend un ou plusieurs éléments d'assemblage auxiliaires (14) associés à une ou plusieurs desdites cloisons (12), et formés de façon à définir au moins un appui de support (16) sur lequel une partie d'extrémité dudit module photovoltaïque (18) peut être déposée, afin de permettre d'associer ledit module photovoltaïque (18) audit panneau de revêtement (10), dans lequel lesdits appuis de support (16) ont des dimensions adaptées à la dimension du module photovoltaïque (18) à associer au panneau de revêtement et sont dotés d'une surface de support (20), **caractérisée en ce que** ladite surface de support (20) définit un plan de support (P) coplanaire par rapport au plan (S) défini par la surface supérieure desdites parois (12), et dans lequel lesdits éléments d'assemblage auxiliaires (14) comprennent au moins une section (15) formée de façon à définir lesdits appuis de support (16) et une couche (21) de matériau thermo-isolant associé au niveau de la partie inférieure à ladite section (15), ayant une forme coordonnée avec la forme de ladite section (15), ladite couche (21) de matériau thermo-isolant étant formée de façon à définir une rainure (22) ayant une forme coordonnée avec la forme de la cloison (12) revêtue, de sorte qu'à l'état assemblé une portion latérale du module photovoltaïque (18) peut reposer sur ladite surface de support (20) dudit appui de support (16) pendant que le module photovoltaïque (18) est en même temps supporté par une ou plusieurs cloisons (12) du panneau de revêtement (10) et/ou d'un panneau de revêtement adjacent (10).

2. Panneau de revêtement selon la revendication 1, **caractérisé en ce que** lesdits éléments d'assemblage auxiliaires (14) comprennent deux appuis de support (16) opposés l'un à l'autre.

3. Panneau de revêtement selon la revendication 1, **caractérisé en ce que** lesdits éléments d'assemblage auxiliaires (14) sont eux-mêmes formés sensiblement comme une cloison (12).

4. Panneau de revêtement selon la revendication 1, **caractérisé en ce que** la hauteur (h) dudit appui de support (16) est sensiblement égale à la hauteur du module photovoltaïque (18).

5. Panneau de revêtement selon la revendication 1, **caractérisé en ce que** la largeur (1) dudit appui de support (16) est adaptée à la dimension du module photovoltaïque (18) devant être associé au panneau de revêtement.

6. Panneau de revêtement selon la revendication 1, **caractérisé en ce que** lesdits éléments d'assemblage (14) peuvent être associés à une ou plusieurs desdites cloisons (12) sensiblement au moyen d'un couplage de même forme.

7. Procédé de réalisation d'un panneau de revêtement (10) selon la revendication 1, pouvant être utilisé pour réaliser des toits de bâtiments et pour loger au moins un module photovoltaïque (18) pouvant convertir une énergie solaire en énergie électrique, comprenant au moins une couche externe (11) constituée d'un matériau métallique formé de façon à former un profilé défini par une série de cloisons (12) disposées parallèles et distancées transversalement, **caractérisé en ce qu'**il comprend au moins une étape dans laquelle un ou plusieurs éléments d'assemblage auxiliaires (14) sont associés à une ou plusieurs desdites cloisons (12), lesdits éléments d'assemblage auxiliaires (14) étant formés de façon à définir au moins un appui de support (16) sur lequel une partie d'extrémité du module photovoltaïque (18) est disposée, afin de permettre d'associer ledit module photovoltaïque (18) audit panneau de revêtement (10).

8. Toit de bâtiments réalisé au moyen d'une pluralité de panneaux de revêtement (10) selon la revendication 1.
